(19) Europäisches Patentamt
European Patent Office
Office européen des brevets

(11) **EP 4 425 215 A1**

(12) **EUROPEAN PATENT APPLICATION**
published in accordance with Art. 153(4) EPC

(43) Date of publication:
**04.09.2024  Bulletin 2024/36**

(21) Application number: **21962477.2**

(22) Date of filing: **29.10.2021**

(51) International Patent Classification (IPC):
***G01S 13/90*** (2006.01)

(52) Cooperative Patent Classification (CPC):
**G01S 13/90**

(86) International application number:
**PCT/JP2021/040046**

(87) International publication number:
**WO 2023/073936 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventors:
• **YAMAGUCHI Yuki
Tokyo 108-8001 (JP)**
• **TANAKA Taichi
Tokyo 108-8001 (JP)**
• **TODA Masato
Tokyo 108-8001 (JP)**

(74) Representative: **Betten & Resch
Patent- und Rechtsanwälte PartGmbB
Maximiliansplatz 14
80333 München (DE)**

(54) **SIGNAL PROCESSING SYSTEM AND SIGNAL PROCESSING METHOD**

(57)    The signal processing system 20 includes generation means 21 which generates a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a SAR and the imaging condition of the SAR image to be analyzed.

FIG. 4

EP 4 425 215 A1

**Description**

**Technical Field**

This invention relates to a signal processing system, a signal processing method and a signal processing program.

**Background Art**

Patent Literatures 1-4 describe change detection technology using SAR images. Patent Literature 1 describes a computer implementation method for determining coherence between composite images with phase and amplitude components.

Patent Literature 2 describes a method for processing SAR image data that includes multiple frames for each of multiple image shapes.

Patent Literature 3 describes a method and device for detecting at least one target in an image where the image contains a set of pixels with the size assigned to each pixel by the image

Patent Literature 4 describes a disaster countermeasure support method for accurately, quickly, and systematically carrying out countermeasure planning and activities during emergency response, recovery, and reconstruction after a disaster occurs.

In the disaster countermeasure support method described in Patent Literature 4, the synthetic aperture radar mounted on a satellite takes images of the ground surface to be photographed during normal times before a disaster occurs and obtains radar image data. In addition, in the disaster countermeasure support method described in Patent Literature 4, after a disaster occurs, images of the target ground surface are taken within a number of days shorter than the number of return orbit days, and efforts are made to quickly understand the damage situation by comparing with radar image data during normal operation.

**Citation List**

**Patent Literature**

> PTL 1: European Patent Application Publication No. 3540462
> PTL 2: G.B. Patent Application Publication No. 2553284
> PTL 3: U.S. Patent No. 10571560
> PTL 4: International Publication 2008/016153

**Summary of Invention**

**Technical Problem**

Technology for detecting a change from a steady state by using a complex correlation coefficient between a complex image showing the steady state that matches an imaging condition of the SAR image to be analyzed and the SAR image to be analyzed are not described in Patent Literatures 1 to 4. In particular, the disaster countermeasure support method described in Patent Literature 4 only uses intensity of reflected wave. Therefore, each technology described in Patent Literatures 1-4 cannot correctly detect changes from the steady state.

Accordingly, one of the purposes of the present invention is to provide a signal processing system, a signal processing method, and a signal processing program that can correctly detect a change from a steady state.

**Solution to Problem**

A signal processing system according to the present invention includes generation means for generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a SAR and the imaging condition of the SAR image to be analyzed.

A signal processing method implemented by a computer, according to the present invention includes implemented by a computer, includes generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a SAR and the imaging condition of the SAR image to be analyzed.

A signal processing program according to the present invention for causing a computer to execute generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a SAR and the imaging condition of the SAR image to be analyzed.

**Advantageous Effects of Invention**

According to the present invention, it is possible to correctly detect a change from steady state.

**Brief Description of Drawings**

[FIG. 1] It depicts an explanatory diagram showing a relationship between a coherence value and correlation of intensity and phase between SAR images.

[FIG. 2] It depicts an explanatory diagram showing an example of a SAR satellite imaging a structure.

[FIG. 3] It depicts an explanatory diagram showing an example of a layover phenomenon that occurs in a SAR image.

[FIG. 4] It depicts a block diagram showing a configuration example of the signal processing system of the first example embodiment of this invention.

[FIG. 5] It depicts an explanatory diagram showing an example of an estimation method of the complex reflectivity distribution at the pixel corresponding to the azimuth-range position ($x^{\rightarrow}$) in SAR tomography using the three-dimensional information reconstruction unit 110.

[FIG. 6] It depicts a flowchart showing an operation of signal processing by the signal processing system 100 of the first example embodiment.

[FIG. 7] It depicts a flowchart showing an operation of the three-dimensional information reconstruction process by the three-dimensional information reconstruction unit 110 of the first example embodiment.

[FIG. 8] It depicts a flowchart showing an operation of the simulated SAR image generation process by the simulated SAR image generator 120 of the first example embodiment.

[FIG. 9] It depicts a block diagram showing a configuration example of the signal processing system of the second example embodiment of this invention.

[FIG. 10] It depicts an explanatory diagram showing a specific example of the first change detection process by the first change detection unit 130.

[FIG. 11] It depicts a flowchart showing an operation of signal processing by the signal processing system 101 of the second example embodiment.

[FIG. 12] It depicts a flowchart showing an operation of the first change detection process by the first change detection unit 130 of the second example embodiment.

[FIG. 13] It depicts a block diagram showing a configuration example of the signal processing system of the third example embodiment of this invention.

[FIG. 14] It depicts a flowchart showing an operation of signal processing by the signal processing system 102 of the third example embodiment.

[FIG. 15] It depicts a flowchart showing an operation of the second change detection process by the second change detection unit 140 of the third example embodiment.

[FIG. 16] It depicts an explanatory diagram showing a hardware configuration example of the signal processing system according to this invention.

[FIG. 17] It depicts a block diagram showing of an overview of the signal processing system according to this invention.

**Description of Embodiments**

First, the problem to be solved by this invention will be explained.

In this description, a state in which only permanently existing objects, such as structures, exist in the area to be analyzed is called a "steady state". The "permanently existing" means that it exists over the monitoring period.

In image analysis, background subtraction technology and anomaly detection technology are known as a technology for detecting objects (vehicles, aircraft, etc.) other than permanently existing objects such as structures, and for detecting ground conditions such as new construction or collapse of structures.

The technology described above are realized by selecting or generating image data showing the steady state from image data stored in the past and detecting changes from the images to be analyzed.

A SAR (Synthetic Aperture Radar) image is a complex image that has information on the intensity and phase of the irradiated microwaves for each pixel. Coherent change detection technology is one of the change detection technologies for complex images.

Coherent change detection technology is technology that can detect fine changes from the steady state based on high and low values of the complex correlation coefficient (coherence), which indicates the degree of similarity between images. Coherence, which is a complex correlation coefficient between SAR images, is one indicator that indicates the "correlation of intensity and phase in a local area" between SAR images. When a method of detecting changes using coherence is used, the sensitivity of the change detection is increased because phase information is used in addition to intensity.

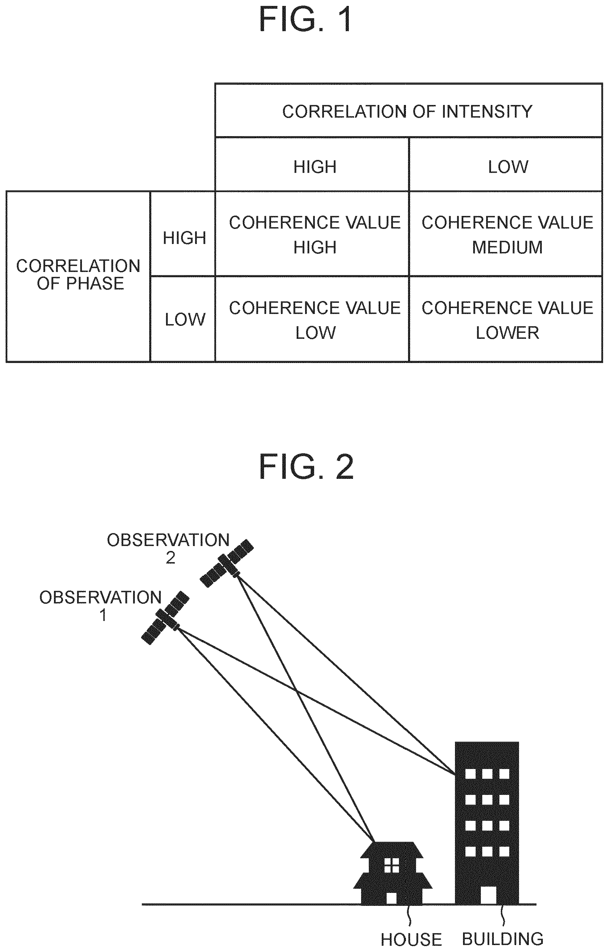

FIG. 1 is an explanatory diagram showing a relationship between a coherence value and correlation of intensity and phase between SAR images. As shown in FIG. 1, when a coherence value is high, both the similarity of intensity and phase between SAR images are high. In other words, there is almost no change between SAR images.

As shown in FIG. 1, when a coherence value is low, at least one of the intensity similarity and phase similarity between the SAR images is low. In other words, a change exists between SAR images.

In addition, the coherence value is an indicator that is more sensitive to changes in phase than to changes in intensity of the reflected wave. As shown in FIG. 1, a coherence value is lower when the phase similarity is lower than the intensity similarity. The coherent change detection technology can also capture the switching of reflectors.

The problem to be solved by this invention is to generate a complex image showing the steady state suitable for SAR image analysis.

SAR images observed by SAR satellites orbiting the earth have different imaging conditions (for example, satellite position at the time of observation) for each observation. Therefore, even when the same steady state is observed, there are differences in the SAR images obtained for each observation. In particular, in areas with structures with height differences, such as urban areas, the phase information changes significantly from observation to observation. Therefore, if complex images showing the same steady state cannot be generated for each imaging condition, changes in the images due to differences in imaging conditions are taken as changes occurring within the area to be analyzed, resulting in a false detection.

One reason why SAR images observed under different observation conditions differ, when imaging conditions are different, even under the same steady state, is the height of structures. FIG. 2 is an explanatory diagram showing an example of a SAR satellite imaging a structure. The SAR satellite is a satellite equipped with SAR.

The imaging conditions are different between observation 1 and observation 2 shown in FIG. 2. Observation 1 and Observation 2 differ in the amount of phase change that depends on the height of the structure. Therefore, even under the same steady state, the observed SAR image have different phases.

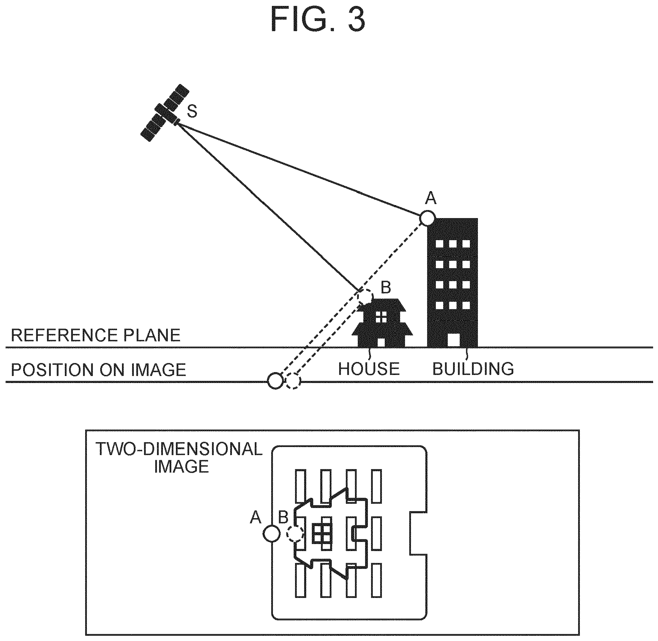

Another reason why SAR images observed under different observation conditions differ, when imaging conditions are different, even under the same steady state, is the intensity of reflections from overlapping structures. FIG. 3 is an explanatory diagram showing an example of a layover phenomenon that occurs in a SAR image.

As shown in FIG. 3, when distance SA < distance SB, position A of the building and position B of the house are reversed in the image. The position reversal phenomenon shown in FIG. 3 is the layover phenomenon.

When a SAR satellite takes the steady state image under conditions in which the layover phenomenon occurs, a two-dimensional image (SAR image) in which a building and a house overlap, as shown in FIG. 3, is taken. The area where a building and a house overlap in the two-dimensional image shown in FIG. 3 is the layover area where signals received from multiple reflectors overlap. The layover area is an area where it is difficult to retrieve information on individual structures because of the overlap of information on multiple structures.

In the layover area, the phase of the SAR image obtained for each observation also depends on the intensity of the overlapping structures. Since the overlapping structures are different under different imaging conditions, the phase of the observed SAR image will be different even under the same steady state.

Due to the above two causes, the observed SAR image may differ even when the SAR satellite observes the steady state. In other words, the intensity and phase of a permanently existing object, such as a structure, recorded in a SAR image depends on the imaging condition of the SAR image.

As described above, even when the steady state is observed by SAR, the SAR image observed for each imaging condition differs significantly. Therefore, it is difficult to estimate a complex image showing the steady state for each imaging condition.

Without being able to estimate a complex image showing the steady state for each imaging condition, it is difficult to detect changes from the SAR image to be analyzed using coherent change detection technology that use phase information. In particular, it is more difficult to estimate a complex image that shows the steady state for each imaging condition because the layover phenomenon peculiar to SAR images tends to occur in areas where tall man-made structures bristles, such as an urban area.

As a method of correlation using phase information other than coherence values, for example, there is a method of extracting phase information from SAR images as real values and correlating with the extracted real values.

Hereinafter, example embodiments of this invention that solve the problem of generating a complex image showing the steady state suitable for SAR image analysis is described with reference to the drawings.

Example embodiment 1.

[Description of Configuration]

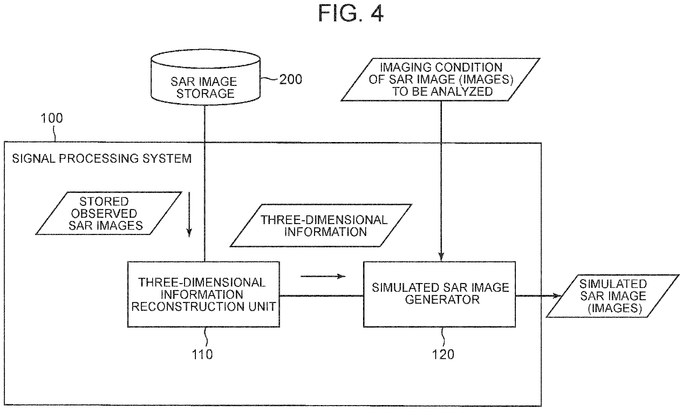

Hereinafter, the first example embodiment of this invention is described below with reference to the drawings. FIG. 4 is a block diagram showing a configuration example of the signal processing system of the first example embodiment of this invention.

The signal processing system 100 generates a simulated SAR image from the stored observed SAR images.

The simulated SAR image in this example embodiment means a two-dimensional image that simulates the intensity and phase information that would be expected to be observed when the three-dimensional information of the reconstructed area to be analyzed (data with information on intensity and phase at each three-dimensional position in the steady state) are taken under the same imaging conditions as the SAR image to be analyzed, i.e., a complex image showing a steady state suitable for the imaging condition of the SAR image to be analyzed.

The SAR image to be analyzed is the image obtained by the SAR satellite, and is the SAR image to which the change detection is applied. In other words, the simulated SAR image is a complex image showing a steady state suitable for the imaging conditions of the SAR image to be analyzed.

As shown in FIG. 4, the signal processing system 100 includes a three-dimensional information reconstruction unit 110 and a simulated SAR image generator 120. As shown in FIG. 4, the signal processing system 100 is communicatively connected to a SAR image storage 200.

When the three-dimensional information reconstruction unit 110 is included in a system other than the signal processing system 100, the signal processing system 100 may only include the simulated SAR image generator 120.

The SAR image storage 200 has a function of storing one or more observed SAR images. The SAR image storage 200 may be included in the signal processing system 100.

The observed SAR images stored in the SAR image storage 200 are input to the three-dimensional information reconstruction unit 110. The input observed SAR image is a complex image that has information on the intensity and phase of an irradiated microwave for each pixel, including the position of the SAR satellite at the time of observation, coordinates of the area to be analyzed, and information on the imaging condition indicating the resolution, etc. The three-dimensional information reconstruction unit 110 may include not only the observed SAR image that observes the steady state, but also the observed SAR image taken when there is a change from the steady state in the area to be analyzed.

The three-dimensional information reconstruction unit 110 has a function of reconstructing and outputting three-dimensional information (data having information on intensity and phase at each three-dimensional position under the steady state) of the area to be analyzed. Specifically, the three-dimensional information output by the three-dimensional information reconstruction unit 110 may be a three-dimensional complex reflectivity distribution with intensity and phase information, or three-dimensional point group data, which is a set of points with intensity and phase information. In addition to the intensity and phase information, the output three-dimensional information may have information such as temperature and displacement.

There in SAR tomography as a method of reconstructing three-dimensional information in the three-dimensional information reconstruction unit 110. SAR tomography is a method that uses multiple observed SAR images to estimate a complex reflectivity distribution in the elevation direction for each pixel. The elevation direction represents a direction perpendicular to the azimuth-range plane (the plane formed by the direction of travel and line of sight of the SAR satellite).

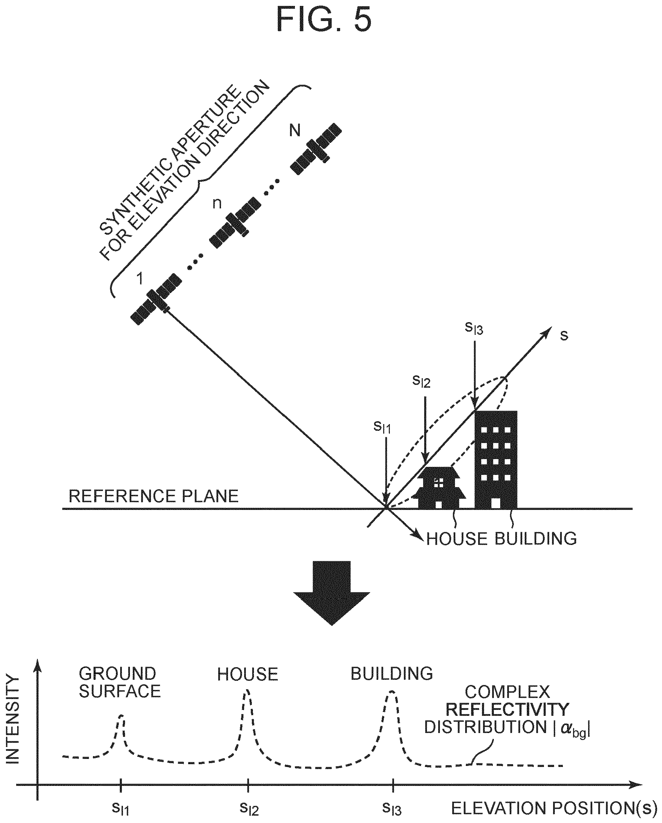

FIG. 5 is an explanatory diagram showing an example of the estimation method of the complex reflectivity distribution at the pixel corresponding to the azimuth-range position ($x^{\rightarrow}$) in SAR tomography using a three-dimensional information reconstruction unit 110.

In this description, the symbols used in the text, such as "$\rightarrow$", should be placed directly above the immediately preceding character, but due to limitations of textual notation, they are placed immediately after the character in question, as described above.

In FIG. 5, s represents the elevation direction. The direction perpendicular to direction s in FIG. 5 represents the azimuth-range plane. The azimuth-range position ($x^{\rightarrow}$) is the intersection of the axis indicating the elevation direction and the axis indicating the satellite line of sight direction in FIG. 5.

Based on the multiple observed SAR images, the three-dimensional information reconstruction unit 110 estimates the complex reflectivity distributions for each pixel, which indicate the height, intensity, and phase, respectively, of a structure that is constant over the observation period.

When SAR tomography is used in the three-dimensional information reconstruction unit 110, a three-dimensional complex reflectivity distribution is generated by combining the complex reflectivity obtained for each pixel for all pixels in the area to be analyzed.

The reason why the observed SAR images are input to the three-dimensional information reconstruction unit 110 is that multiple observed SAR images taken from slightly different orbits are required to reconstruct a three-dimensional steady state using SAR tomography or other methods.

The upper part in FIG. 5 shows observations from the first to the Nth observation by a SAR satellite. N represents the total number of observations and is an integer greater than 1.

The first to Nth observations shown in FIG. 5 correspond to synthetic aperture for the elevation direction. In the nth ($1 \leq n \leq N$) observation, the relational equation between the received signal (complex signal) recorded at the pixel corresponding to the azimuth-range position ($x^{\rightarrow}$) and the complex reflectivity distribution at that pixel is given by the following Equation (1).

[Math. 1]

$$g_{\mathrm{obs}}(\boldsymbol{x}, n) = \boldsymbol{r}(\boldsymbol{x}, n) \cdot \boldsymbol{\alpha}\,(\boldsymbol{x}, n) \qquad (1)$$

$g_{\mathrm{obs}}$ ($x^{\rightarrow}$, n) in Equation (1) represents the received signal (complex signal) recorded at the pixel corresponding to the azimuth-range position ($x^{\rightarrow}$). Also, $r^{\rightarrow}$ ($x^{\rightarrow}$, n) in Equation (1) represents the steering vector at the pixel corresponding to the azimuth-range position ($x^{\rightarrow}$). $\alpha^{\rightarrow}$ ($x^{\rightarrow}$, n) in Equation (1) represents the complex reflectivity distribution at the pixel corresponding to the azimuth-range position ($x^{\rightarrow}$).

The steering vector is obtained from the imaging condition. For example, the steering vector $r^{\rightarrow}$ ($x^{\rightarrow}$, n) is expressed by the following Equation (2).

[Math. 2]

$$\boldsymbol{r}(\boldsymbol{x}, n) = [\exp(-4\mathrm{j}\pi k_{\mathrm{n}} s_1)\,, \dots, \exp(-4\mathrm{j}\pi k_{\mathrm{n}} s_{\mathrm{L}})] \in \mathbb{C}^{1 \times L} \qquad (2)$$

$k_{\mathrm{n}}$ in Equation (2) represents a phase-elevation conversion coefficient (the coefficient that converts between phase and elevation). Also, $s_l$ (l=1,...,L) in Equation (2) represents the position in the elevation direction. The steering vector may be expressed by an equation other than Equation (2). For example, a steering vector that takes into account the effects of temperature and displacement may be used. In addition, j in Equation (2) represents an imaginary unit. $\pi$ in Equation (2) represents the circle ratio.

The relational equations as in Equation (1) are defined for each of the 1st to Nth observations. The three-dimensional information reconstruction unit 110 obtains a complex reflectivity distribution $\alpha_{\mathrm{bg}}^{\rightarrow}$ ($x^{\rightarrow}$) of a permanently existing structure at the pixel corresponding to the azimuth-range position ($x^{\rightarrow}$), by solving an optimization problem using multiple observation data (received signals) and steering vectors.

In other words, the three-dimensional information reconstruction unit 110 obtains the complex reflectivity distribution $\alpha_{\mathrm{bg}}^{\rightarrow}$ ($x^{\rightarrow}$) of a structure by determining the complex reflectivity distribution so that N times of observation data in which areas including structures etc. were taken and N times of steering vectors are fitted.

The lower part in FIG. 5 shows an example of the absolute value | $\alpha_{\mathrm{bg}}$ | of the complex reflectivity distribution $\alpha_{\mathrm{bg}}^{\rightarrow}$ ($x^{\rightarrow}$) of a permanently existing structure at the pixel corresponding to the azimuth-range position ($x^{\rightarrow}$) obtained by the three-dimensional information reconstruction unit 110. The absolute value | $\alpha_{\mathrm{bg}}$ | corresponds to the intensity on the vertical axis shown in FIG. 5. The horizontal axis shown in FIG. 5 indicates the elevation position.

The complex reflectivity distribution $\alpha_{\mathrm{bg}}^{\rightarrow}$ ($x^{\rightarrow}$) of the permanently present structure at the pixel corresponding to the azimuth-range position ($x^{\rightarrow}$) shown in FIG. 5 shows higher values at the elevation positions $s_{11}$ (ground surface), $s_{12}$ (house) and $s_{13}$ (building), respectively. In other words, the received signal at position $x^{\rightarrow}$ is the overlap of the complex intensities at elevation positions $s_{l1}$, $s_{l2}$ and $s_{l3}$. More precisely expressed, the received signal at position $x^{\rightarrow}$ corresponds to the result of the Fourier transform of the complex reflectivity distribution in the elevation direction.

When SAR tomography is used in the three-dimensional information reconstruction unit 110, the three-dimensional information reconstruction unit 110 outputs, as three-dimensional information, the three-dimensional complex reflectivity distribution that combines the complex reflectivity distribution for each pixel obtained by solving the optimization problem for all pixels in the area to be analyzed. The three-dimensional information reconstruction unit 110 may output, as three-dimensional information, not only the three-dimensional complex reflectivity distribution as described above, but also three-dimensional point group data, which is a set of points that have information on the position, intensity, and phase of the reflector, respectively.

The three-dimensional information (data having information on intensity and phase at each three-dimensional position in the steady state) reconstructed by the three-dimensional information reconstruction unit 110 is input to the simulated SAR image generator 120. The three-dimensional information input to the simulated SAR image generator 120 may have information such as temperature and displacement in addition to the intensity and phase information.

The imaging conditions of one or more SAR images to be analyzed are also input to the simulated SAR image generator 120. The one or more SAR images to be analyzed may be one or more observed SAR images selected from the observed SAR images stored in the SAR image storage 200, or one or more newly obtained observed SAR images. The multiple SAR images to be analyzed may be multiple observed SAR images that are a mixture of the stored and obtained observed SAR images.

The imaging conditions of SAR images to be analyzed that are input to the simulated SAR image generator 120 are not limited to the imaging conditions in the observed SAR image used to reconstruct three-dimensional information in the three-dimensional information reconstruction unit 110, but may be the imaging conditions in one or more newly obtained observed SAR images.

The imaging condition input to the simulated SAR image generator 120 includes the position of the SAR satellite at the time of observation, the coordinates of the area to be analyzed, and the resolution. The input imaging condition may be the imaging condition of the observed SAR image stored in the SAR image storage 200 or the imaging condition of the newly obtained observed SAR image.

The simulated SAR image generator 120 has a function to perform simulated observation using the reconstructed three-dimensional information (data with information on intensity and phase at each three-dimensional position in the steady state) and the imaging conditions of the SAR image (images) to be analyzed. Specifically, the simulated SAR image generator 120 generates simulated SAR images, which are complex images showing the steady state suitable for the imaging conditions of the SAR image (images) to be analyzed.

The simulated SAR image generator 120 performs simulated observation for each imaging condition of the SAR image (images) to be analyzed. After one or more simulated observations, the simulated SAR image generator 120 outputs simulated SAR image (images) corresponding to each of one or more obtained imaging conditions.

Since the signal processing system 100 in this example embodiment uses data with information on intensity and phase at each three-dimensional position in the steady state, i.e., three-dimensional information, it can generate simulated SAR images, which are complex images showing the steady state that match the imaging conditions of the SAR image (images) to be analyzed.

As described above, the three-dimensional information reconstruction unit 110 in the signal processing system 100 calculates three-dimensional information using observed SAR image of an area taken by SAR.

The simulated SAR image generator 120 in the signal processing system 100 generates a simulated SAR image, which is a complex image showing the steady state suitable for the imaging conditions of the SAR image to be analyzed, using the three-dimensional information, which is data having information on intensity and phase at a three-dimensional position in the steady state, reconstructed using the observed SAR image of an area taken by SAR, and the imaging conditions of the SAR image to be analyzed.

[Description of Operation]

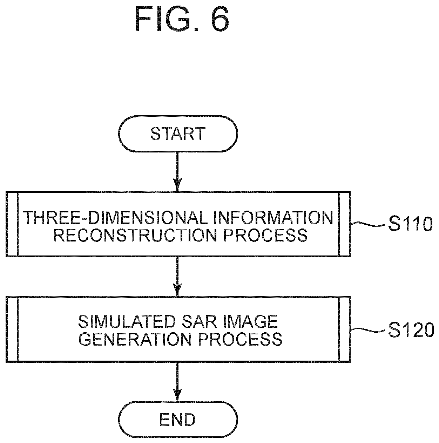

Hereinafter, the operation of generating a simulated SAR image by the signal processing system 100 of this example embodiment will be described below with reference to FIG. 6. FIG. 6 is a flowchart showing an operation of signal processing by the signal processing system 100 of the first example embodiment.

First, the three-dimensional information reconstruction unit 110 in the signal processing system 100 executes the three-dimensional information reconstruction process (step S110). The three-dimensional information reconstruction process is a process to reconstruct three-dimensional information of an area to be analyzed based on the stored observed SAR images.

Next, the simulated SAR image generator 120 in the signal processing system 100 executes the simulated SAR image generation process (step S120). The simulated SAR image generation process is a process to generate simulated SAR image (images), which are image (images) in which simulated received signals are recorded when observed under the same imaging conditions as each of the SAR image (images) to be analyzed, based on the imaging conditions of the SAR image (images) to be analyzed and the reconstructed three-dimensional information.

After executing the simulated SAR image generation process, the signal processing system 100 terminates the signal process.

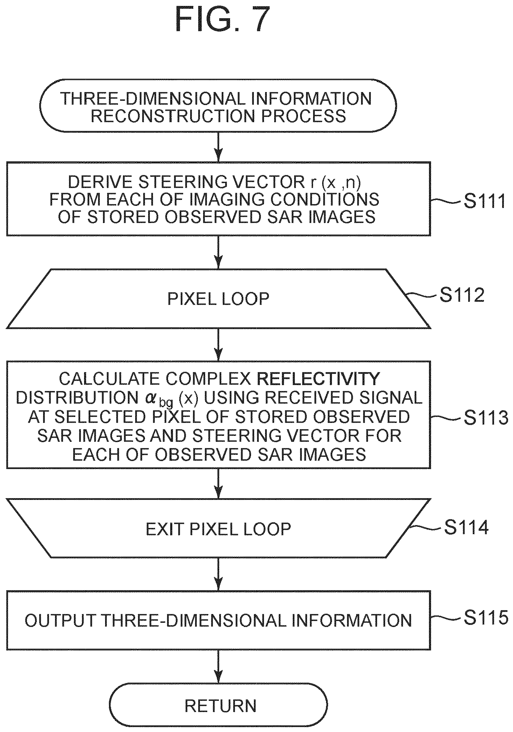

Next, the three-dimensional information reconstruction process of step S110, which is a sub-process constituting the signal processing shown in FIG. 6, is explained with reference to FIG. 7. FIG. 7 is a flowchart showing an operation of the three-dimensional information reconstruction process by the three-dimensional information reconstruction unit 110 of the first example embodiment.

First, the three-dimensional information reconstruction unit 110 derives the steering vector $\vec{r}\,(\vec{x}, n)$ from each of the imaging conditions of the stored observed SAR images (step S111).

Next, the three-dimensional information reconstruction unit 110 selects one pixel in the stored observed SAR images for which the complex reflectivity distribution has not yet been calculated. In other words, it enters the pixel loop (step S112).

The three-dimensional information reconstruction unit 110 calculates the complex reflectivity distribution $\alpha_{bg}^{\rightarrow}$ ($x^{\rightarrow}$) using the received signals at selected pixels of the stored observed SAR images and the steering vectors for each of the observed SAR images (step S113). In step S113, the complex reflectivity distribution $\alpha_{bg}^{\rightarrow}$ ($x^{\rightarrow}$) is calculated for the selected pixel corresponding to position $x^{\rightarrow}$.

The three-dimensional information reconstruction unit 110 repeats the process of step S113 while there are pixels in the stored observed SAR images for which the complex reflectivity distribution has not been calculated. When the complex reflectivity distributions of all pixels in the observed SAR images have been calculated, the three-dimensional information reconstruction unit 110 exits the pixel loop (step S114). The three-dimensional information of the target area is reconstructed when the three-dimensional information reconstruction unit 110 has exited the pixel loop.

After exiting the pixel loop, the three-dimensional information reconstruction unit 110 outputs the calculated three-dimensional complex reflectivity distribution as data having information on intensity and phase at each three-dimensional position in the steady state, i.e., three-dimensional information. The output three-dimensional information may be a three-dimensional complex reflectivity distribution as described above or three-dimensional point group data, which is a set of points with information on intensity and phase (step S115). After outputting the three-dimensional information, the three-dimensional information reconstruction unit 110 terminates the three-dimensional information reconstruction process.

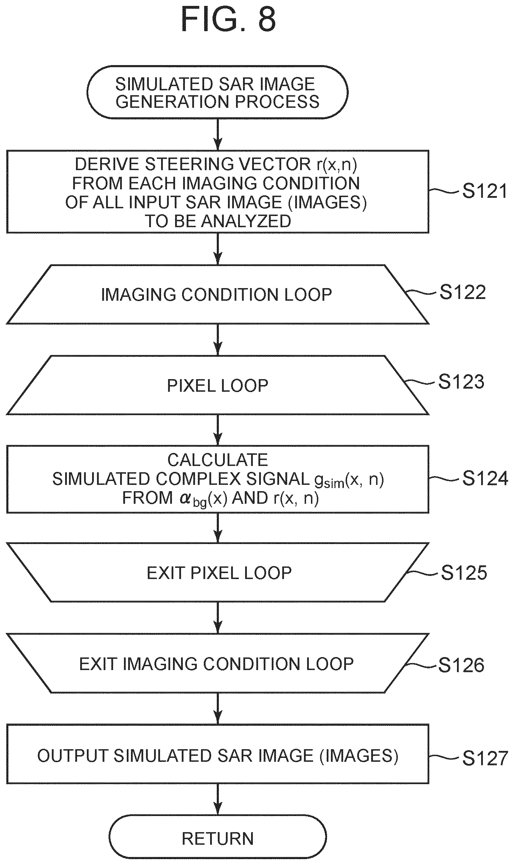

Next, the simulated SAR image generation process of step S120, which is a sub-process constituting the signal processing shown in FIG. 6, is explained with reference to FIG. 8. FIG. 8 is a flowchart showing an operation of the simulated SAR image generation process by the simulated SAR image generator 120 of the first example embodiment.

First, the simulated SAR image generator 120 derives the steering vector $r^{\rightarrow}$ ($x^{\rightarrow}$, n) from each of the input imaging conditions of all SAR image (images) to be analyzed (step S121).

Next, the simulated SAR image generator 120 selects one imaging condition for which a simulated SAR image has not yet been generated from among the input imaging conditions for the SAR image(images) to be analyzed. In other words, it enters the imaging condition loop (step S122).

Next, the simulated SAR image generator 120 selects one pixel for which a simulated complex signal has not yet been calculated from among the pixels of the observed SAR image (images) corresponding to the selected imaging condition. In other words, it enters the pixel loop (step S123).

The simulated SAR image generator 120 calculates a simulated complex signal $g_{sim}$ ($x^{\rightarrow}$, n) at position $x^{\rightarrow}$ corresponding to the selected pixel using the input complex reflectivity distribution $\alpha_{bg}^{\rightarrow}$ ($x^{\rightarrow}$) and the steering vector $r^{\rightarrow}$ ($x^{\rightarrow}$, n) corresponding to the selected imaging condition (step S124). The simulated SAR image generator 120 calculates the simulated complex signal according to the following Equation (3), for example.
[Math. 3]

$$g_{sim}(x,n) = r(x,n) \cdot \alpha_{bg}(x) \qquad (3)$$

The simulated SAR image generator 120 may calculate the simulated complex signal according to an equation other than Equation (3). In step S124, the simulated complex signal $g_{sim}$ ($x^{\rightarrow}$, n) at position $x^{\rightarrow}$, which is predicted to be taken under the imaging conditions of the nth SAR image, is calculated.

The simulated SAR image generator 120 repeats the process of step S124 while there are pixels for which simulated complex signals have not been calculated among the pixels of the observed SAR image corresponding to the selected imaging condition. When the simulated complex signals of all pixels in the observed SAR image have been calculated, the simulated SAR image generator 120 exits the pixel loop (step S125).

The simulated SAR image generator 120 repeats the processes of steps S123 to S125 while there are imaging conditions for which no simulated SAR image has been generated among the input imaging conditions of the SAR image (images) to be analyzed. When simulated SAR images have been generated for all the imaging conditions of the SAR image (images) to be analyzed, the simulated SAR image generator 120 exits the imaging condition loop (step S126).

When the simulated SAR image generator 120 exits the imaging condition loop, the process of step S124 is executed for all positions in all input imaging conditions of the SAR image (images) to be analyzed, and simulated SAR images of the target area are generated.

After exiting the imaging condition loop, the simulated SAR image generator 120 outputs a simulated SAR image, which is a complex image showing the steady state suitable for the input imaging conditions of the SAR images to be analyzed. When the imaging conditions of SAR images to be analyzed are input, the simulated SAR image generator 120 outputs simulated SAR images, which are complex images showing the steady state suitable for each of the input imaging conditions of SAR images to be analyzed (step S127). After outputting the simulated SAR image (images), the simulated SAR image generator 120 terminates the simulated SAR image generation process.

[Description of Effect]

The three-dimensional information reconstruction unit 110 in the signal processing system 100 of this example embodiment reconstructs data having information on intensity and phase at each three-dimensional position in the steady state of the area to be analyzed, i.e., three-dimensional information, based on the stored observed SAR images. The simulated SAR image generator 120 also generates simulated SAR image (images) based on the imaging conditions of the SAR image (images) to be analyzed and the reconstructed three-dimensional information.

An advantage of using SAR tomography is that simulated complex signals representing the intensity and phase of each overlapping reflector are recorded in a simulated SAR image. Even if a DEM (Digital Elevation Model) or the like is used, it is difficult to generate a simulated complex signal that accurately indicates the intensity and phase of each overlapping reflector. Therefore, users who perform coherent change detection using the generated simulated SAR images can detect changes robustly even in the layover area.

In this example embodiment, the three-dimensional information reconstruction unit 110 used SAR tomography as means of calculating three-dimensional information. However, the three-dimensional information reconstruction unit 110 may use other means that can reproduce intensity and phase as means for calculating three-dimensional information, other than SAR tomography.

Example embodiment 2.

[Description of Configuration]

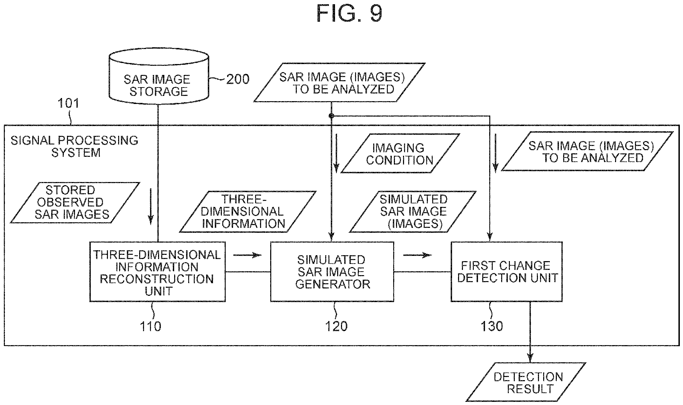

Next, the second example embodiment of this invention is described below with reference to the drawings. FIG. 9 is a block diagram showing a configuration example of the signal processing system of the second example embodiment of this invention.

As shown in FIG. 9, the signal processing system 101 includes a three-dimensional information reconstruction unit 110, a simulated SAR image generator 120, and a first change detection unit 130. As shown in FIG. 9, the signal processing system 101 is communicatively connected to the SAR image storage 200.

Each function of the three-dimensional information reconstruction unit 110 and the simulated SAR image generator 120 in this example embodiment is the same as each function in the first example embodiment.

The simulated SAR image (images) corresponding to all the imaging conditions, which is input to the simulated SAR image generator 120, of the SAR image (images) to be analyzed, is input to the first change detection unit 130 from the simulated SAR image generator 120. The SAR image (images) to be analyzed is also input to the first change detection unit 130. The SAR image (images) to be analyzed includes received signals indicating intensity and phase information.

The first change detection unit 130 has a function of outputting as a detection result the value calculated by the correlation process using information of a phase of the simulated SAR image and a phase of the SAR image to be analyzed, or a result of judging the existence of a change by the threshold process.

The correlation should represent the degree of similarity between the SAR image to be analyzed and the simulated SAR image (hereinafter referred to as " degree of similarity "). The degree of similarity is, for example, a distance between multiple images. The degree of similarity may also be expressed as an index other than the distance between the images. For convenience, the degree of similarity is hereinafter denoted as correlation.

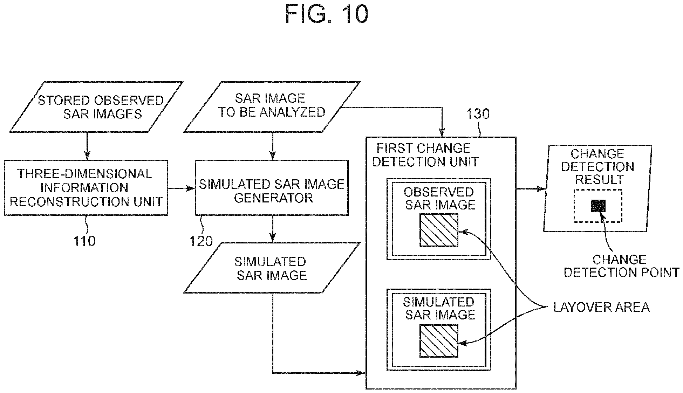

FIG. 10 is an explanatory diagram showing a specific example of the first change detection process by the first change detection unit 130. As described in the first example embodiment, the three-dimensional information reconstruction unit 110 reconstructs three-dimensional information using as input observed SAR images stored in the SAR image storage 200. The three-dimensional information reconstruction unit 110 then outputs reconstructed three-dimensional information.

An imaging condition of the SAR image to be analyzed and the reconstructed three-dimensional information are input to the simulated SAR image generator 120. The simulated SAR image generator 120 uses the input imaging condition to generate a complex image showing the steady state for each imaging condition, i.e., a simulated SAR image.

The SAR image to be analyzed input to the simulated SAR image generator 120 and the simulated SAR image generated by the simulated SAR image generator 120 are input to the first change detection unit 130 in this example embodiment. The first change detection unit 130 detects whether a change has occurred from the steady state between the input SAR image to be analyzed and the simulated SAR image.

For example, the first change detection unit 130 calculates a coherence value $\gamma(x^{\rightarrow})$ at each position $x^{\rightarrow}$ of the SAR image to be analyzed and the simulated SAR image. As described above, the calculated coherence value is higher when it has not changed from the steady state. In addition, the calculated coherence value is lower if when has changed from the steady state.

As shown in FIG. 10, the first change detection unit 130 illustrates, for example, the coherence value $\gamma(x^{\rightarrow})$

obtained at each position $x^{\rightarrow}$ in two dimensions. When the SAR image to be analyzed contains a point that has changed from the steady state, the change point is detected as a decrease in the coherence value.

As explained in the first example embodiment, when simulated SAR images are used, changes are robustly detected even in the layover area. Therefore, as shown in FIG. 10, the first change detection unit 130 can also identify the change detection point in the layover area. The dashed line frame in the change detection result shown in FIG. 10 corresponds to a layover area.

The first change detection unit 130 may output the value itself calculated by the correlation process using the phase information, or it may output the result of determining the presence or absence of change by the threshold process.

As described above, the first change detection unit 130 in the signal processing system 101 detects changes that occur in areas in the SAR image to be analyzed by comparing the SAR image to be analyzed with the simulated SAR image.

For example, the first change detection unit 130 detects a change by calculating the degree of similarity between the SAR image to be analyzed and the simulated SAR image. The first change detection unit 130 may calculate the degree of similarity using the information of the phase indicated by the SAR image to be analyzed and the information of the phase indicated by the simulated SAR image. The degree of similarity may be a coherence value.

[Description of Operation]

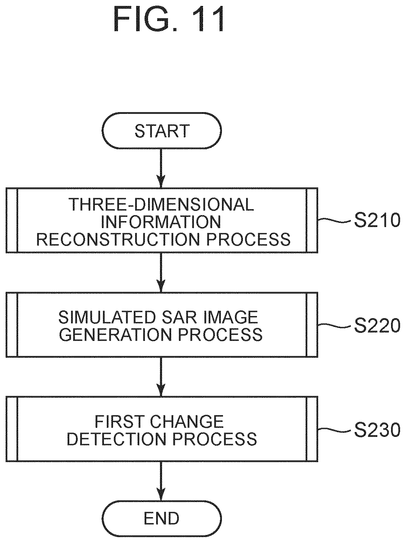

Hereinafter, an operation of identifying a change detection point by the signal processing system 101 of this example embodiment will be described with reference to FIG. 11. FIG. 11 is a flowchart showing an operation of signal processing by the signal processing system 101 of the second example embodiment.

First, the three-dimensional information reconstruction unit 110 in the signal processing system 101 executes a three-dimensional information reconstruction process (step S210). The three-dimensional information reconstruction process of step S210 is the same as the three-dimensional information reconstruction process of step S110.

Next, the simulated SAR image generator 120 in the signal processing system 101 executes a simulated SAR image generation process (step S220). The simulated SAR image generation process of step S220 is the same as the simulated SAR image generation process of step S120.

Next, the first change detection unit 130 in the signal processing system 101 executes a first change detection process (step S230). The first change detection process is a process of detecting a change by executing a correlation process using phase information.

After executing the first change detection process, the signal processing system 101 terminates signal processing.

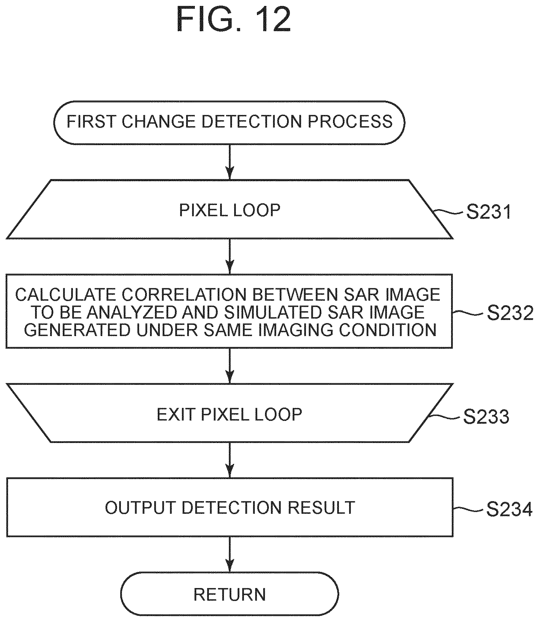

Next, the first change detection process of step S230, which is a sub-process constituting the signal processing shown in FIG. 11, will be described with reference to FIG. 12. FIG. 12 is a flowchart showing an operation of the first change detection process by the first change detection unit 130 of the second example embodiment.

First, the first change detection unit 130 selects one pixel for which a correlation has not yet been calculated from among the pixels of the simulated SAR image. In other words, it enters the pixel loop (step S231).

The first change detection unit 130 calculates a correlation at the selected pixel between the SAR image to be analyzed and a simulated SAR image generated under the same imaging conditions as the SAR image to be analyzed (step S232).

Specifically, the first change detection unit 130 calculates the correlation between the complex signal $g_{obs}$ ($x^{\rightarrow}$, n) in the selected pixels of the SAR image to be analyzed and the simulated complex signal $g_{sim}$ ($x^{\rightarrow}$, n) in the selected pixels of the simulated SAR image generated under the same imaging condition as the SAR image to be analyzed, using the phase information.

For example, the first change detection unit 130 may use a coherence value obtained by the following Equation (4) for the correlation to be calculated.

[Math. 4]

$$\gamma(x,n) = \frac{E[g_{obs}(x,n)g_{sim}(x,n)^*]}{E[g_{obs}(x,n)g_{obs}(x,n)^*]E[g_{sim}(x,n)g_{sim}(x,n)^*]} \qquad (4)$$

E(·) in Equation (4) represents an expected value. In addition to the coherence value, the first change detection unit 130 may use a value calculated by a correlation process using phase information.

The first change detection unit 130 repeats the process of step S232 while there are pixels for which correlation has not been calculated in the simulated SAR image. When the correlations of all pixels in the simulated SAR image have been calculated, the first change detection unit 130 exits the pixel loop (step S233).

After exiting the pixel loop, the first change detection unit 130 outputs the detection results including the calculated multiple correlations, etc. (step S234). After outputting the detection result, the first change detection unit 130 terminates the first change detection process.

When simulated SAR images are input, the first change detection unit 130 executes the first change detection process of step S230 for each input simulated SAR image.

[Description of Effect]

The first change detection unit 130 in the signal processing system 101 calculates the correlation between a SAR image to be analyzed and a simulated SAR image generated under the same imaging condition as the SAR image to be analyzed, using information on the phase. By referring to the correlation calculated using the information of phase, the user can easily detect change from the steady state. In addition, by calculating the correlation between the simulated SAR image and the SAR image to be analyzed by the first change detection unit 130, the user can detect changes robustly even in the layover area.

As shown in FIG. 10, when the first change detection unit 130 projects the result of change detection on a two-dimensional map, the user can easily identify the change detection point.

Even if the target area has changed multiple times over the observation period, the first change detection unit 130 can detect each change as a change from the steady state by calculating the correlation between the multiple SAR images to be analyzed and the simulated SAR image corresponding to each of them.

When the first change detection unit 130 displays multiple change detection results in time series when multiple change detection results are obtained as described above, the user can easily identify each change detection point and each change detection time.

Example embodiment 3.

[Description of Configuration]

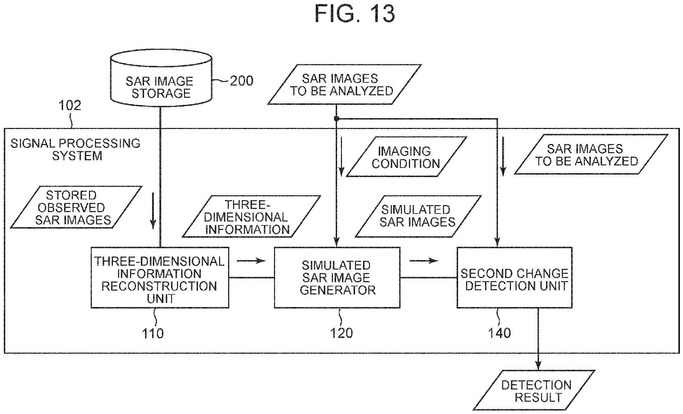

Next, a third example embodiment of this invention is described below with reference to the drawings. FIG. 13 is a block diagram showing a configuration example of the signal processing system of the third example embodiment of this invention.

As shown in FIG. 13, the signal processing system 102 includes a three-dimensional information reconstruction unit 110, a simulated SAR image generator 120, and a second change detection unit 140. As shown in FIG. 13, the signal processing system 102 is communicatively connected to the SAR image storage 200.

Each function of the three-dimensional information reconstruction unit 110 and the simulated SAR image generator 120 in this example embodiment is the same as each function in the first example embodiment.

In this example embodiment, imaging conditions of SAR images to be analyzed are input to the simulated SAR image generator 120. The simulated SAR image generator 120 outputs simulated SAR images corresponding to all the imaging conditions of the SAR images to be analyzed that are input to the simulated SAR image generator 120.

The simulated SAR images corresponding to all the imaging conditions of the SAR images to be analyzed input to the simulated SAR image generator 120 are input to the second change detection unit 140 from the simulated SAR image generator 120. The SAR images to be analyzed are input to the second change detection unit 140. The SAR images to be analyzed include received signals indicating intensity and phase information.

The second change detection unit 140 executes correlation process using phase information for each pair of the SAR image to be analyzed and the simulated SAR image corresponding to the SAR image to be analyzed, and outputs the statistic obtained from each value calculated for each pair or the result of determining the presence or absence of change by threshold process as detection results.

As the statistic obtained from calculated value for each pair of one of SAR images to be analyzed and one of simulated SAR images corresponding to one of the SAR images to be analyzed after performing a correlation process for each pair using phase information, for example, there is a mean or median value calculated by the correlation process using the phase information.

As described above, the simulated SAR image generator 120 in the signal processing system 102 generates simulated SAR images for each of the imaging conditions of the multiple SAR images to be analyzed. The second change detection unit 140 calculates the degree of similarity for each pair of the SAR image to be analyzed and the simulated SAR image over the multiple pairs, and detects change using the calculated multiple degrees of similarity.

Instead of the second change detection unit 140, the signal processing system 102 may include the first change detection unit 130 including the function of the second change detection unit 140.

[Description of Operation]

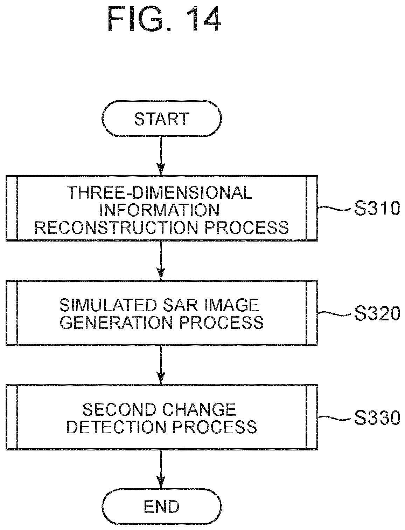

Hereinafter, the operation of identifying a change detection point of the operation by the signal processing system 102 of this example embodiment will be described with reference to FIG. 14. FIG. 14 is a flowchart showing an operation of signal processing by the signal processing system 102 of the third example embodiment.

First, the three-dimensional information reconstruction unit 110 in the signal processing system 102 executes a three-dimensional information reconstruction process (step S310). The three-dimensional information reconstruction process of step S310 is the same as the three-dimensional information reconstruction process of step S110.

Next, the simulated SAR image generator 120 in the signal processing system 102 executes the simulated SAR image generation process (step S320). The simulated SAR image generation process of step S320 is the same as the simulated SAR image generation process of step S120.

Next, the second change detection unit 140 in the signal processing system 102 executes a second change detection process (step S330). The second change detection process is a process to detect changes by executing a correlation process using phase information multiple times and using statistic obtained from the multiple correlations calculated.

After executing the second change detection process, the signal processing system 102 terminates signal process.

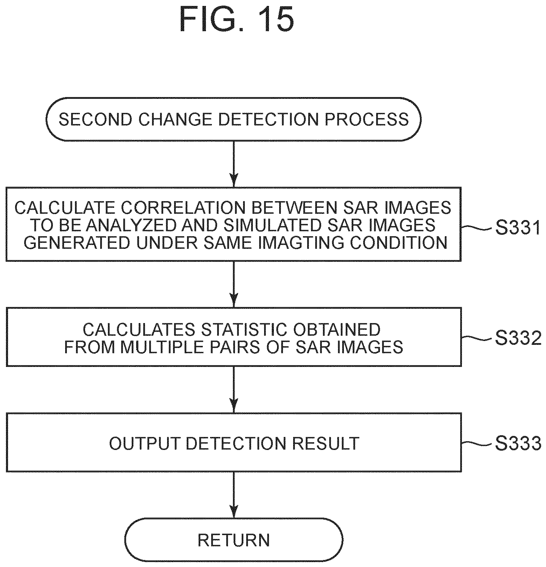

Next, the second change detection process of step S330, which is a sub-process constituting the signal processing shown in FIG. 14, is explained with reference to FIG. 15. FIG. 15 a flowchart showing an operation of the second change detection process by the second change detection unit 140 of the third example embodiment.

The second change detection unit 140 calculates the correlation between the SAR images to be analyzed and the simulated SAR images generated under the same imaging conditions as the SAR images to be analyzed (step S331). For example, the second change detection unit 140 executes the correlation process using the phase information multiple times for each pair of SAR image and simulated SAR image to be analyzed.

Next, the second change detection unit 140 executes correlation process using phase information for each pair of the SAR image to be analyzed and the simulated SAR image corresponding to the SAR image to be analyzed, and calculates the statistic obtained from each value calculated for each pair (step S332). For example, the second change detection unit 140 calculates a statistic such as an average from multiple correlations calculated in step S331.

Next, the second change detection unit 140 outputs the detection result including the calculated statistic, etc. (step S333). After outputting the detection results, the second change detection unit 140 terminates the second change detection process.

[Description of Effect]

The second change detection unit 140 in the signal processing system 102 of this example embodiment executes the correlation process using information on phase for each pair of the SAR image to be analyzed and the simulated SAR image corresponding to the SAR image to be analyzed, and outputs the statistic itself obtained from each value calculated for each pair or the result of judging the presence or absence of change by thresholding the statistic. When the statistic is used, the robustness of change detection is improved because not only the high/low value of a single correlation but also the difference of each correlation from a typical value (for example, average value) can be evaluated.

Each example embodiment of the signal processing system 101-102 is utilized in detecting changes that occur in urban areas without people going there in person. The signal processing systems 101-102 are also utilized in quickly detecting when and where changes occur in regularly monitored areas.

It is supposed that each example embodiment of the signal processing systems 101-102 will be applied to the surveillance of military bases and cities in areas of concern from a security perspective. The reason for this is that users of the signal processing systems 101-102 can quickly capture the appearance of aircraft and vehicles in a surveillance area simply by comparing the SAR image to be analyzed with a simulated SAR image.

The three-dimensional information estimated by the three-dimensional information reconstruction unit 110 in the SAR tomography may be stored on a server or other device. When the three-dimensional information is stored beforehand on a server or other device, the user of the signal processing system 100-102 can generate a simulated SAR image for the area of change to be detected. In other words, the users do not need to reconstruct the three-dimensional information themselves.

For example, when generating teacher data for machine learning for object detection in SAR images, if the output of the first change detection unit 130 is added to the machine learning, the position of the object to be assigned to the teacher data is limited to the output area of the first change detection unit 130. Accordingly, the range of annotation becomes narrower and the cost of learning is reduced.

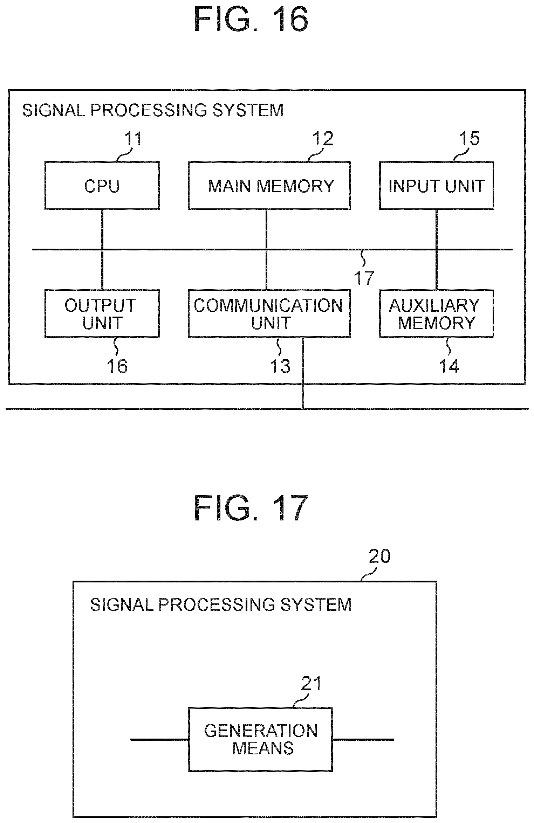

Hereinafter, a specific example of the hardware configuration of the signal processing systems 100-102 of each example embodiment will be described below. FIG. 16 is an explanatory diagram showing a hardware configuration example of the signal processing system according to this invention.

The signal processing system shown in FIG. 16 comprises a CPU (Central Processing Unit) 11, a main memory 12, a communication unit 13, and an auxiliary memory 14. In addition, the signal processing system comprises an input unit 15 for user operation and an output unit 16 for presenting ae processing result or a progress of processing to the user.

The signal processing system is realized by software, whereby the CPU 11 shown in FIG. 16 executes a program that provides the function of each component.

In other words, each function is realized by software when CPU 11 loads and executes the program stored in the auxiliary memory 14 into the main memory 12 to control the operation of the signal processing system.

The signal processing system shown in FIG. 16 may comprise a DSP (Digital Signal Processor) instead of CPU 11. Alternatively, the signal processing system shown in FIG. 16 may comprise both CPU 11 and DSP.

The main memory 12 is used as a working area for data and as a temporary save area for data. The main memory 12 is, for example, RAM (Random Access Memory).

The communication unit 13 has a function of inputting and outputting data to and from peripheral devices through a wired or wireless network (information communication network).

The auxiliary memory 14 is a non-transitory tangible storage medium. Examples of non-transitory tangible storage media include a magnetic disk, an optical disk, a CD-ROM (Compact Disk Read Only Memory), a DVD-ROM (Digital Versatile Disk Read Only Memory, and semiconductor memory.

The input unit 15 has a function of inputting data and processing instructions. The input unit 15 is an input device such as a keyboard or a mouse, for example.

The output unit 16 has a function of outputting data. The output unit 16 is, for example, a display device such as a liquid crystal display device or a printing device such as a printer.

As shown in FIG. 16, each component in the signal processing system is connected to a system bus 17.

In the signal processing system 100 of the first example embodiment, the auxiliary memory 14 stores programs for realizing the three-dimensional information reconstruction unit 110 and the simulated SAR image generator 120.

The signal processing system 100 may be implemented with circuits containing hardware components inside such as a LSI (Large Scale Integration), etc., that realize the functions shown in FIG. 4, for example.

In the signal processing system 101 of the second example embodiment, the auxiliary memory 14 stores programs for realizing the three-dimensional information reconstruction unit 110, the simulated SAR image generator 120, and the first change detection unit 130.

The signal processing system 101 may be implemented with circuits containing hardware components inside such as a LSI, etc. that realize the functions shown in FIG. 9, for example.

In the signal processing system 102 of the third example embodiment, the auxiliary memory 14 stores programs for realizing the three-dimensional information reconstruction unit 110, the simulated SAR image generator 120, and the second change detection unit 140.

The signal processing system 102 may be implemented with circuits containing hardware components inside such as a LSI, etc. that realize the functions shown in FIG. 13, for example.

The signal processing systems 100-102 may be realized by hardware that does not include computer functions using elements such as CPU, etc. For example, some or all of the components may be realized by general purpose circuits (circuitry) or dedicated circuits, processors, etc. or a combination thereof. They may be configured by a single chip (for example, the LSI described above) or by multiple chips connected through a bus. Some or all of each component may be realized by a combination of the above-mentioned circuits, etc. and programs.

Some or all of each component of the signal processing system 100-102 be configured one or more information processing devices comprising an operation unit and a storage unit.

When some or all of each component is realized by multiple information processing devices or circuits, etc., the multiple information processing devices or circuits, etc. may be centrally located or distributed. For example, the information processing device and circuits, etc. may be realized as a client-and-server system, a cloud computing system, etc., each of which is connected through a communication network.

Next, an overview of this invention will be described. FIG. 17 is a block diagram showing of an overview of the signal processing system according to this invention. The signal processing system 20 according to this invention includes generation means 21 (for example, the simulated SAR image generator 120) which generates a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a SAR and the imaging condition of the SAR image to be analyzed.

Such a configuration allows the signal processing system to detect a change from the steady state based on phase information.

The signal processing system 20 may include calculation means (for example, three-dimensional information reconstruction unit 110) which calculates three-dimensional information using the observed SAR image.

Such a configuration allows the signal processing system to reconstruct three-dimensional information using the observed SAR image.

The signal processing system 20 may include detection means (for example, the first change detection unit 130) which detects a change occurring in an area in the SAR image to be analyzed by comparing the SAR image to be analyzed and the simulated SAR image.

Such a configuration allows the signal processing system to detect a change from the steady state using a complex correlation coefficient between SAR images.

The detection means may detect a change by calculating a degree of similarity between the SAR image to be analyzed and the simulated SAR image. The detection means may calculate the degree of similarity using the information of the phase indicated by the SAR image to be analyzed and the information of the phase indicated by the simulated SAR image. The degree of similarity may be a coherence value.

Such a configuration allows the signal processing system to detect a change from the steady state using a coherence value obtained from pairs of SAR images to be analyzed and simulated SAR images.

The generation means 21 may generate simulated SAR images for each of the imaging conditions of multiple SAR images to be analyzed, and the detecting means may calculate the degree of similarity for each pair of the SAR image to be analyzed and the simulated SAR image over the multiple pairs, and detect a change using the calculated degree of similarity.

Such a configuration allows the signal processing system to detect a change from the steady state using multiple complex correlation coefficients obtained from multiple pairs of SAR images to be analyzed and simulated SAR images.

Although the invention of the present application has been described above with reference to example embodiments, the present invention is not limited to the above example embodiments. Various changes can be made to the configuration and details of the present invention that can be understood by those skilled in the art within the scope of the present invention.

**Reference Signs List**

11 CPU
12 Main memory
13 Communication unit
14 Auxiliary memory
15 Input unit
16 Output unit
17 System bus
20, 100, 101, 102 Signal processing system
21 Generation means
110 Three-dimensional information reconstruction unit
120 Simulated SAR image generator
130 First change detection unit
140 Second change detection unit
200 SAR image storage

**Claims**

1. A signal processing system comprising:
   generation means for generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a synthetic aperture radar (SAR) and the imaging condition of the SAR image to be analyzed.

2. The signal processing system according to claim 1, further comprising
   calculation means for calculating the three-dimensional information using the observed SAR image.

3. The signal processing system according to claim 1 or 2, further comprising
   detection means for detecting a change occurring in an area in the SAR image to be analyzed by comparing the SAR image to be analyzed and the simulated SAR image.

4. The signal processing system according to claim 3, wherein
the detection means detects the change by calculating a degree of similarity between the SAR image to be analyzed and the simulated SAR image.

5. The signal processing system according to claim 4, wherein
the detection means calculates the degree of similarity using phase information indicated by the SAR image to be analyzed and phase information indicated by the simulated SAR image.

6. The signal processing system according to claim 5, wherein
the degree of similarity is a coherence value.

7. The signal processing system according to any one of claims 4 to 6, wherein

the generation means generates the simulated SAR image for each of the imaging conditions of the multiple SAR images to be analyzed, and
the detection means calculates the degree of similarity for each pair of the SAR image to be analyzed and the simulated SAR image over multiple pairs, and detects the change using the calculated multiple degrees of similarity.

8. A signal processing method implemented by a computer, comprising:
generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a synthetic aperture radar (SAR) and the imaging condition of the SAR image to be analyzed.

9. A computer readable recording medium storing a signal processing program:
generating a simulated SAR image, which is a complex image showing a steady state suitable for an imaging condition of a SAR image to be analyzed using a three-dimensional information, which is data with information on an intensity and a phase at a three dimensional position under the steady state reconstructed using an observed SAR image of an area taken by a synthetic aperture radar (SAR) and the imaging condition of the SAR image to be analyzed.

# FIG. 1

|  |  | CORRELATION OF INTENSITY | |
|  |  | HIGH | LOW |
| CORRELATION OF PHASE | HIGH | COHERENCE VALUE HIGH | COHERENCE VALUE MEDIUM |
|  | LOW | COHERENCE VALUE LOW | COHERENCE VALUE LOWER |

# FIG. 2

# FIG. 3

REFERENCE PLANE

POSITION ON IMAGE

HOUSE    BUILDING

A

B

S

TWO-DIMENSIONAL
IMAGE

A  B

# FIG. 4

SAR IMAGE STORAGE ~200

IMAGING CONDITION OF SAR IMAGE (IMAGES) TO BE ANALYZED

100

SIGNAL PROCESSING SYSTEM

STORED OBSERVED SAR IMAGES

THREE-DIMENSIONAL INFORMATION

THREE-DIMENSIONAL INFORMATION RECONSTRUCTION UNIT

110

SIMULATED SAR IMAGE GENERATOR

120

SIMULATED SAR IMAGE (IMAGES)

# FIG. 5

SYNTHETIC APERTURE FOR ELEVATION DIRECTION

N

n

1

$s_{l3}$

$s_{l2}$

$s_{l1}$

s

REFERENCE PLANE

HOUSE BUILDING

GROUND SURFACE

HOUSE

BUILDING

COMPLEX REFLECTIVITY DISTRIBUTION $|\alpha_{bg}|$

INTENSITY

$s_{l1}$   $s_{l2}$   $s_{l3}$   ELEVATION POSITION(s)

# FIG. 6

START

THREE-DIMENSIONAL INFORMATION RECONSTRUCTION PROCESS — S110

SIMULATED SAR IMAGE GENERATION PROCESS — S120

END

# FIG. 7

THREE-DIMENSIONAL INFORMATION
RECONSTRUCTION PROCESS

DERIVE STEERING VECTOR $r(x, n)$
FROM EACH OF IMAGING CONDITIONS
OF STORED OBSERVED SAR IMAGES ⟋S111

PIXEL LOOP ⟋S112

CALCULATE COMPLEX **REFLECTIVITY**
DISTRIBUTION $\alpha_{bg}(x)$ USING RECEIVED SIGNAL
AT SELECTED PIXEL OF STORED OBSERVED
SAR IMAGES AND STEERING VECTOR FOR
EACH OF OBSERVED SAR IMAGES ⟋S113

EXIT PIXEL LOOP ⟋S114

OUTPUT THREE-DIMENSIONAL INFORMATION ⟋S115

RETURN

# FIG. 8

SIMULATED SAR IMAGE
GENERATION PROCESS

DERIVE STEERING VECTOR $r(x,n)$
FROM EACH IMAGING CONDITION
OF ALL INPUT SAR IMAGE (IMAGES)
TO BE ANALYZED —— S121

IMAGING CONDITION LOOP —— S122

PIXEL LOOP —— S123

CALCULATE
SIMULATED COMPLEX SIGNAL $g_{sim}(x, n)$
FROM $\alpha_{bg}(x)$ AND $r(x, n)$ —— S124

EXIT PIXEL LOOP —— S125

EXIT IMAGING CONDITION LOOP —— S126

OUTPUT SIMULATED SAR IMAGE (IMAGES) —— S127

RETURN

# FIG. 9

FIG. 10

STORED OBSERVED
SAR IMAGES

SAR IMAGE
TO BE ANALYZED

130

THREE-DIMENSIONAL
INFORMATION
RECONSTRUCTION UNIT

110

SIMULATED SAR IMAGE
GENERATOR

120

SIMULATED
SAR IMAGE

FIRST CHANGE
DETECTION UNIT

OBSERVED
SAR IMAGE

SIMULATED
SAR IMAGE

CHANGE
DETECTION
RESULT

CHANGE
DETECTION POINT

LAYOVER AREA

# FIG. 11

```
                    ┌─────────────┐
                    │    START    │
                    └──────┬──────┘
                           │
                           ▼
        ┌──────────────────────────────────┐
        │      THREE-DIMENSIONAL           │
        │        INFORMATION               │──── S210
        │   RECONSTRUCTION PROCESS         │
        └──────────────────┬───────────────┘
                           │
                           ▼
        ┌──────────────────────────────────┐
        │     SIMULATED SAR IMAGE          │──── S220
        │     GENERATION PROCESS           │
        └──────────────────┬───────────────┘
                           │
                           ▼
        ┌──────────────────────────────────┐
        │        FIRST CHANGE              │──── S230
        │      DETECTION PROCESS           │
        └──────────────────┬───────────────┘
                           │
                           ▼
                    ┌─────────────┐
                    │     END     │
                    └─────────────┘
```

# FIG. 12

```
┌──────────────────────────────────────────┐
│   FIRST CHANGE DETECTION PROCESS          │
└──────────────────────────────────────────┘
                    │
                    ▼
    ╱───────────────────────────────────╲
   ╱          PIXEL LOOP                  ╲        S231
  ╱                                        ╲
 ╱──────────────────────────────────────────╲
                    │
                    ▼
┌──────────────────────────────────────────┐
│ CALCULATE CORRELATION BETWEEN SAR IMAGE   │
│  TO BE ANALYZED AND SIMULATED SAR IMAGE   │     S232
│ GENERATED UNDER SAME IMAGING CONDITION    │
└──────────────────────────────────────────┘
                    │
                    ▼
 ╲──────────────────────────────────────────╱
  ╲          EXIT PIXEL LOOP                ╱       S233
   ╲                                       ╱
    ╲─────────────────────────────────────╱
                    │
                    ▼
┌──────────────────────────────────────────┐
│          OUTPUT DETECTION RESULT          │     S234
└──────────────────────────────────────────┘
                    │
                    ▼
         ┌──────────────────────┐
         │        RETURN         │
         └──────────────────────┘
```

# FIG. 13

# FIG. 14

```
        ┌─────────────┐
        │    START    │
        └─────────────┘
               │
               ▼
    ┌─────────────────────────┐
    │    THREE-DIMENSIONAL     │
    │       INFORMATION        │──── S310
    │  RECONSTRUCTION PROCESS  │
    └─────────────────────────┘
               │
               ▼
    ┌─────────────────────────┐
    │   SIMULATED SAR IMAGE    │──── S320
    │    GENERATION PROCESS    │
    └─────────────────────────┘
               │
               ▼
    ┌─────────────────────────┐
    │      SECOND CHANGE       │──── S330
    │    DETECTION PROCESS     │
    └─────────────────────────┘
               │
               ▼
        ┌─────────────┐
        │     END     │
        └─────────────┘
```

# FIG. 15

```
┌─────────────────────────────────────┐
│  SECOND CHANGE DETECTION PROCESS     │
└─────────────────────────────────────┘
                  │
                  ▼
┌─────────────────────────────────────┐
│ CALCULATE CORRELATION BETWEEN SAR    │
│ IMAGES TO BE ANALYZED AND SIMULATED  │──S331
│ SAR IMAGES GENERATED UNDER SAME      │
│ IMAGTING CONDITION                   │
└─────────────────────────────────────┘
                  │
                  ▼
┌─────────────────────────────────────┐
│      CALCULATES STATISTIC OBTAINED   │──S332
│    FROM MULTIPLE PAIRS OF SAR IMAGES │
└─────────────────────────────────────┘
                  │
                  ▼
┌─────────────────────────────────────┐
│        OUTPUT DETECTION RESULT       │──S333
└─────────────────────────────────────┘
                  │
                  ▼
         ┌──────────────────┐
         │      RETURN       │
         └──────────────────┘
```

# FIG. 16

SIGNAL PROCESSING SYSTEM

| 11 | 12 | 15 |
| --- | --- | --- |
| CPU | MAIN MEMORY | INPUT UNIT |

17

| OUTPUT UNIT | COMMUNICATION UNIT | AUXILIARY MEMORY |
| --- | --- | --- |
| 16 | 13 | 14 |

# FIG. 17

20

SIGNAL PROCESSING SYSTEM

21

GENERATION MEANS

## INTERNATIONAL SEARCH REPORT

| International application No. |
|---|
| **PCT/JP2021/040046** |

### A. CLASSIFICATION OF SUBJECT MATTER

*G01S 13/90*(2006.01)i
FI:   G01S13/90 191

According to International Patent Classification (IPC) or to both national classification and IPC

### B. FIELDS SEARCHED

Minimum documentation searched (classification system followed by classification symbols)

G01S7/00-7/42; G01S13/00-13/95

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-187440 A (MITSUBISHI SPACE SOFTWARE KK) 20 August 2009 (2009-08-20)<br>    entire text, all drawings<br>(Family: none) | 1-9 |
| A | JP 2016-057092 A (NATIONAL INSTITUTE OF INFORMATION & COMMUNICATIONS TECHNOLOGY) 21 April 2016 (2016-04-21)<br>    entire text, all drawings<br>(Family: none) | 1-9 |
| A | JP 2008-185375 A (MITSUBISHI ELECTRIC CORPORATION) 14 August 2008 (2008-08-14)<br>    entire text, all drawings<br>(Family: none) | 1-9 |
| A | CN 112099006 A (SUN YAT-SEN UNIVERSITY) 18 December 2020 (2020-12-18)<br>    entire text, all drawings<br>(Family: none) | 1-9 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

**Patent documents cited in the description**

- EP 3540462 A
- GB 2553284 A
- US 10571560 B
- WO 2008016153 A